# FASCICULE DE BREVET EUROPEEN

(11) **EP 3 164 921 B1**
(45) Date de publication et mention de la délivrance du brevet: **28.03.2018**
(21) Numéro de dépôt: 15733744.5
(22) Date de dépôt: 02.07.2015
(51) Int. Cl.: H02H 7/12, H02M 1/32, H05B 33/08, H02M 3/157, H05B 37/02, H02M 3/158

(54) **CONVERTISSEUR ÉLÉVATEUR-ABAISSEUR DE TENSION À CIRCUIT DE PROTECTION**
AUFWÄRTS-/ABWÄRTSWANDLER MIT EINER SCHUTZSCHALTUNG
STEP-UP/STEP-DOWN CONVERTER WITH A PROTECTIVE CIRCUIT

(30) Priorité: 04.07.2014 FR 1456491
(43) Date de publication de la demande: 10.05.2017
(73) Titulaire: Valeo Vision, 93012 Bobigny Cedex (FR)
(72) Inventeur: WACHEUX, Patrick, 27220 Bois le Roy (FR); KRICK, Sébastian, 75019 Paris (FR); LAI-DAC, Kien, 93012 Bobigny Cedex (FR); NGUYEN, Huy-Cuong, 93012 Bobigny Cedex (FR)
(86) Numéro de dépôt international: PCT/EP2015/065104
(87) Numéro de publication internationale: WO 2016/001363

(56) Documents cités:
- EP-A2- 1 508 958
- WO-A1-2008/081223
- WO-A1-2013/102879
- US-B1- 6 574 081

## Description

L'invention a trait au domaine de l'alimentation électrique, par exemple de sources lumineuses, plus précisément de diodes électroluminescentes, LED. En particulier, l'invention se rapporte à un convertisseur de tension continue de type élévateur-abaisseur et à un procédé de protection d'un tel convertisseur au cas où l'alimentation du convertisseur est défaillante.

Il est connu d'utiliser un circuit convertisseur élévateur de tension continue, par exemple de type boost, suivi en série d'un circuit convertisseur abaisseur de tension, tel qu'un circuit buck, afin de piloter l'alimentation d'une source lumineuse telle qu'une diode électroluminescente, LED. Les circuits boost et buck sont de manière générale implémentés par des circuits intégrés, leur activation et désactivation se fait par un signal d'activation (« enable ») dirigé vers une des bornes du circuit intégré. Une diode électroluminescente, LED, est un composant électronique capable d'émettre de la lumière lorsqu'il est parcouru par un courant électrique. L'intensité lumineuse émise par une LED est en général dépendante de l'intensité du courant électrique qui la traverse. C'est pourquoi il est important de piloter l'alimentation électrique de LEDs. Dans le domaine automobile, on a recours de plus en plus à la technologie LED pour diverses solutions d'éclairage et/ ou de signalisation lumineuse.

Le document WO 2013/102879 décrit un par exemple un montage en série d'un circuit élévateur de tension et d'un circuit abaisseur de tension.

Un circuit de pilotage comprenant un convertisseur boost-buck est utilisé pour piloter en courant un ensemble ou groupe de LEDs. Le circuit définit le courant qui traverse une branche montée en charge et comprenant le groupe de LEDs branchées en série. Il est connu d'utiliser des circuits de pilotage distincts alimentant des groupes de LEDs distincts, chaque groupe remplissant une fonction d'éclairage distincte d'un véhicule automobile. De telles fonctions comprennent entre autres les feux de route, les feux de croisements ou l'éclairage sur les côtés.

Il est connu de brancher une capacité de stockage sur la sortie du convertisseur boost. Dans le cas où l'alimentation du convertisseur boost est perdue à cause de circonstances externes au convertisseur, la capacité peut prendre le relais et assurer l'alimentation de la charge de façon temporaire. Dans le cas d'une charge comprenant des LEDs, il est évident que la tension requise au bon fonctionnement des LEDs ne peut pas être assurée pendant longtemps par la charge de la capacité avant que celle-ci ne se décharge complètement.

Il est également connu d'utiliser plusieurs branches de conversion boost-buck en parallèle, chaque branche étant alimentée de façon indépendante. Les sorties des circuits boost sont alors regroupées et alimentent la capacité de stockage. Les circuits buck puisent les charges électriques dans le réservoir ainsi alimenté par l'ensemble des circuits boost de chaque branche. Si l'alimentation d'un des circuits boost devient défaillante, le ou les autres circuits boost peuvent prendre le relai pour alimenter l'ensemble des circuits buck. Chaque circuit est cependant limité à un courant maximum qui peut être atteint. La capacité de stockage peut alors contribuer à l'alimentation des circuits buck en se déchargeant. Une fois la capacité déchargée, l'alimentation de la charge ne peut plus être assurée.

Dans le domaine de l'alimentation de LEDs, et plus particulièrement dans le cas de l'alimentation d'une fonction lumineuse d'un véhicule automobile, un tel comportement n'est pas acceptable.

L'invention a pour objectif de proposer un convertisseur comprenant des moyens de protection palliant au moins un des inconvénients de l'art antérieur. L'invention a également pour objectif de proposer un dispositif de pilotage de l'alimentation électrique de sources lumineuses, un système d'éclairage pour un véhicule automobile utilisant le système de pilotage selon l'invention, ainsi qu'un procédé de protection d'un convertisseur boost-buck.

L'invention a pour objet un dispositif de conversion de tension continue comprenant au moins une branche de conversion, la branche comprenant un montage en série d'un circuit élévateur de tension, et d'un circuit abaisseur de tension, le circuit abaisseur étant apte à être activé ou désactivé par un signal d'activation. Le dispositif comprend des moyens d'activation du circuit abaisseur aptes à émettre un signal d'activation. Les moyens d'activation sont préférentiellement implémentés par un élément microcontrôleur.

Le dispositif est remarquable en ce qu'il comprend en outre des moyens de protection reliés à l'entrée du circuit élévateur, qui empêchent l'activation du circuit abaisseur si la mesure de la tension d'entrée du circuit élévateur est inférieure à une valeur seuil.

De préférence, les moyens de protection peuvent comprendre un élément comparateur, qui permet de comparer la mesure de la tension d'entrée du circuit élévateur à une valeur seuil. Les moyens de protection peuvent également comprendre un circuit « ET » logique ayant comme entrées la sortie du comparateur et le signal d'activation émis par les moyens d'activation. Le signal de sortie du circuit « ET » logique est relayé au circuit abaisseur de façon à activer/désactiver celui-ci.

De préférence, la valeur seuil peut être inférieure à 6V, et préférentiellement égale à 5V.

Les moyens de protection peuvent de préférence permettre l'activation du circuit abaisseur uniquement si la mesure de la tension d'entrée du circuit élévateur est inférieure à une valeur seuil pendant une durée prédéterminée. Si la mesure de tension d'entrée du circuit élévateur est inférieure à la valeur seuil pendant une durée plus courte que la durée prédéterminée, la chute de tension est filtrée du signal d'entrée. La durée prédéterminée est de préférence de l'ordre d'au moins 1 ms.

Les moyens de protection peuvent avantageusement comprendre un filtre électronique configuré pour filtrer la mesure de la tension d'entrée du circuit élévateur avant de la comparer à ladite valeur seuil. Si la mesure de tension d'entrée du circuit élévateur est inférieure à la valeur seuil pendant une durée plus courte que la durée prédéterminée, la chute de tension est filtrée du signal d'entrée.

Les moyens d'activation et les moyens de protection peuvent de préférence être réalisés par un élément microcontrôleur unique.

Le dispositif peut également comprendre un élément de stockage de charge électrique agencé de façon à être chargé par le circuit boost lorsque celui-ci est actif.

Le dispositif peut de préférence comprendre au moins deux branches de conversion. Chaque branche comprend des moyens de protection, et l'élément de stockage de charge électrique est agencé de façon à être chargé par le circuit élévateur de chaque branche lorsque celui-ci est actif.

De préférence, l'élément de stockage peut être une capacité électrique branchée sur la sortie du circuit élévateur.

L'élément de stockage peut de préférence être une capacité électrique branchée à la sortie commune de tous les circuits élévateurs.

Le ou les circuits élévateur de tension peuvent de préférence être des circuits de type boost. Le ou les circuits abaisseur de tension peuvent de préférence être des circuits de type buck.

L'invention a également pour objet un dispositif de pilotage de l'alimentation électrique d'au moins une source lumineuse, le dispositif comprenant un dispositif de conversion de tension continue remarquable en ce qu'il est conforme à l'invention.

L'au moins une source lumineuse peut de préférence être une diode électroluminescente, LED.

L'invention a également pour objet un dispositif lumineux d'un véhicule automobile, comprenant un dispositif de pilotage de l'alimentation électrique d'au moins une source lumineuse, remarquable en ce qu'il est conforme à l'invention.

Finalement, l'invention a également pour objet un procédé de protection d'un convertisseur de tension continue. Le procédé comprend les étapes suivantes :
- mise à disposition d'un convertisseur de tension continue comprenant au moins une branche de conversion, la branche comprenant un montage en série d'un circuit élévateur de tension, et d'un circuit abaisseur de tension, le circuit abaisseur étant apte à être activé ou désactivé par un signal d'activation ;
- mise à disposition de moyens d'activation du circuit abaisseur aptes à émettre un signal d'activation ;
- protection du circuit abaisseur en empêchant son activation par des moyens de protection si la mesure de la tension d'entrée du circuit élévateur est inférieure à une valeur seuil.

Le dispositif et le procédé selon l'invention permettent d'utiliser des circuits de conversion boost et buck connus dans un convertisseur de tension continue, tout en rendant l'activation du ou des circuits buck dépendante de la présence d'une tension minimum à l'entrée de la branche boost-buck y relative. Le circuit de protection selon l'invention permet de rapidement désactiver un circuit buck de façon contrôlée si une chute de tension est détectée sur l'entrée du circuit boost correspondant. Le procédé peut être implémenté par un système analogique on utilisant des composants électroniques bien connus ou par un microcontrôleur programmable.

La solution selon l'invention présente des avantages multiples, comparée à des solutions alternatives envisageables. Une façon alternative de résoudre le problème de la perte d'alimentation d'un circuit buck pourrait être l'utilisation d'une capacité de stockage à capacité plus importante. Cependant, de tels composants sont onéreux et occupent un espace important sur un circuit imprimé. On pourrait également permettre à d'autres circuits boost qui prennent le relai du circuit boost non-alimenté, de consommer plus de courant afin de compenser la perte d'un des circuits boost. Cependant, notamment dans l'application automobile, ceci engendrerait la détection d'un défaut sur le circuit boost qui a pris le relai. Il s'agirait donc d'une détection d'un faux positif.

D'autres caractéristiques et avantages de la présente invention seront mieux compris à l'aide de la description et des dessins, qui ne sont présentés qu'à titre indicatif et non-limitatif de l'invention, et parmi lesquels :
- la figure 1 est une illustration schématique d'un mode de réalisation préférentiel du dispositif selon l'invention ;
- la figure 2 est une illustration schématique détaillée d'un mode de réalisation préférentiel du dispositif selon l'invention ;
- la figure 3 est une illustration schématique d'un mode de réalisation préférentiel du dispositif selon l'invention.

Dans ce qui suit, sauf indication contraire, des références similaires seront utilisées pour décrire des concepts et/ou moyens similaires dans des modes de réalisations différents de l'invention. Par exemple, les références 100 et 200 seront utilisées pour décrire trois modes de réalisation du dispositif selon l'invention.

Lors de la description de l'invention le terme « circuit boost » est utilisé à titre exemplaire d'un circuit élévateur de tension. Similairement, le terme « circuit buck » est utilisé afin de décrire un circuit abaisseur de tension. Cependant, l'invention ne se limite pas à l'utilisation de circuits de type boost et buck, d'autres circuits élévateurs et abaisseurs de tension connus dans l'art étant similairement applicables.

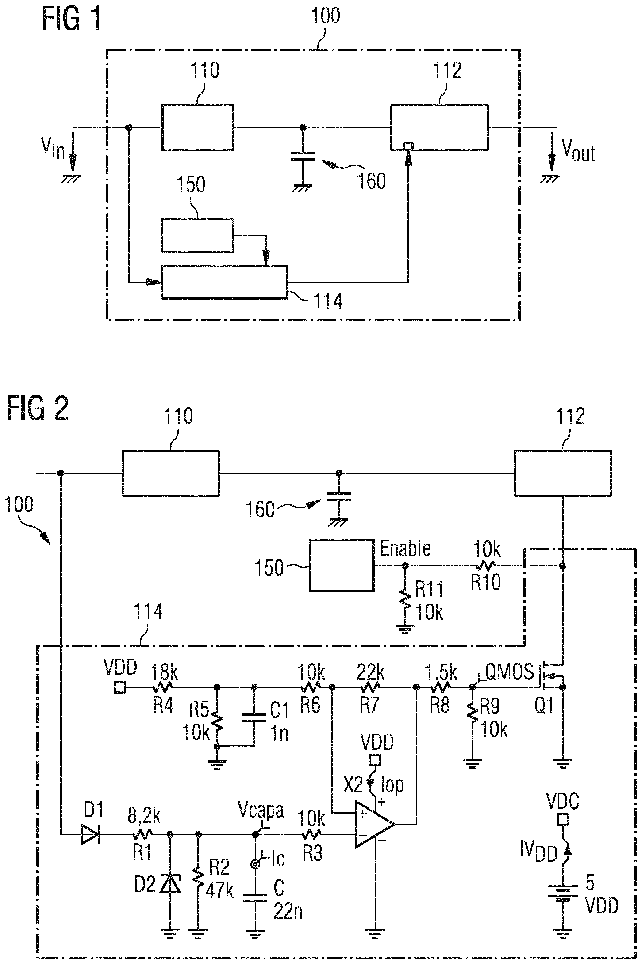

Un mode de réalisation préféré de l'invention est illustré de manière schématique par la Figure 1. Le dispositif 100 permet de convertir une tension continue appliquée à l'entrée Vin en une tension continue de sortie Vout, soit plus basse ou plus élevée que la tension d'entrée. La tension de sortie est alors applicable à un montage en charge du convertisseur 100. Le convertisseur illustré comprend un montage en série d'un circuit élévateur de tension, boost 110, et d'un circuit abaisseur de tension, buck 112. De tels circuits sont en soi connus dans l'art et leur fonctionnement ne sera pas détaillé dans le cadre de la présent description. L'homme du métier saura apprécier que plusieurs variantes de circuits connus pourront remplir les fonctions boost 110 et buck 112 décrites. De manière connue, au moins le circuit buck 112 permet son activation/désactivation par un signal d'activation (« enable »). Le dispositif 100 comprend des moyens d'activation 150, tels qu'un élément microcontrôleur, qui permettent d'activer et de désactiver le circuit buck (ou boost) selon des règles prédéfinies qui gouvernent le fonctionnement des moyens d'activation. En général, si la charge du convertisseur 100 a un besoin d'alimentation électrique, les moyens d'activation 150 sont configurés pour activer le circuit boost ainsi que le circuit buck. Le dispositif 100 peut également comprendre un élément de stockage, par exemple une capacité de stockage 160, qui est branché sur la sortie du circuit boost. Lorsque ce dernier est actif, la capacité est chargée. Dans le cas de l'application à un convertisseur utilisé au sein d'un véhicule automobile, par exemple pour alimenter une fonction lumineuse de celui-ci, le dispositif 100 est alimenté par une source de courant du véhicule, plus précisément par la batterie du véhicule.

Le dispositif comprend en outre des moyens de protection 114 reliés à l'entrée du circuit boost 110, qui empêchent l'activation du circuit buck 112 si la mesure de la tension d'entrée du circuit boost est inférieure à une valeur seuil. La valeur seuil peut être fixée par l'homme du métier en dépendance de l'application visée du convertisseur 100. Elle peut par exemple être inférieure à 6V, ou égale à 5V. Les moyens de protection 114 implémentent une porte logique de type « ET ». Lorsque les moyens d'activation ont activé le circuit buck 112, tandis que la tension d'entrée du circuit boost 110 chute en-dessous de la valeur seuil, un signal de désactivation est relayé au circuit buck 112. Ce dernier n'est activé que si à la fois les moyens d'activation émettent un signal d'activation, et la tension à l'entrée du circuit boost 110 est supérieure à la valeur seuil.

Afin d'éviter l'activation des moyens de protection 114 lorsque des microcoupures interviennent au niveau de la tension d'entrée, il est utile de prévoir un circuit de filtrage de la mesure de la tension d'entrée. Le filtre sert à éliminer ces coupures, qui peuvent être de l'ordre d'une microseconde, de la mesure de la tension d'entrée. En effet ces microcoupures ne donnent en général pas lieu à des problèmes d'alimentation du circuit monté en charge du dispositif 100.

Ceci décrit de manière générique le principe sous-jacent à l'invention. Des exemples d'implémentation non limitatifs sont illustrés par les modes de réalisation décrits dans ce qui suit.

La Figure 2 reprend la structure générale illustrée par la Figure 1. Un exemple de réalisation concret des moyens de protection 114 est donné sous forme d'un schéma électrique. La mesure de tension d'entrée est filtrée par un circuit RC implémentant un délai. Une diode D1 est utilisée afin d'éviter un retour de courant. Une diode Zener D2 est utilisée afin de garantir un niveau logique maximal de 5V pour la fonction de détection. La sortie logique du comparateur X2 définit une tension qui pilote le transistor à effet de champ MOSFET Q1. Si la mesure de tension filtrée est supérieure à 5V, le MOSFET Q1 est conducteur et le signal résultant est combiné avec le signal « enable » des moyens d'activation 150 pour activer le circuit buck 112. Si la mesure de tension filtrée est inférieure à 5V, le MOSFET Q1 est coupé et le signal combiné devient un signal de désactivation du circuit buck 112.

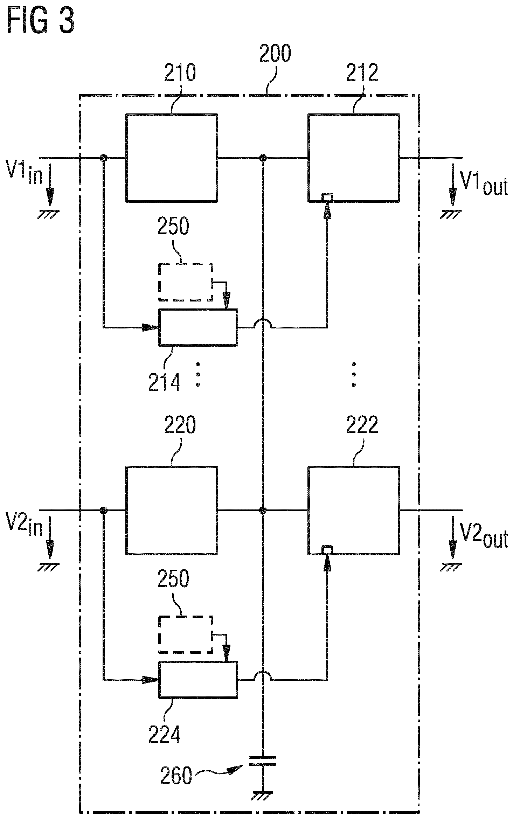

La Figure 3 illustre de manière schématique un autre mode de réalisation préféré de l'invention. Le convertisseur 200 comprend plusieurs branches de conversion montées en parallèle. Chaque branche illustrée comprend un montage en série d'un circuit 210, 220 et d'un circuit buck 212, 222. Le dispositif 200 comprend des moyens d'activation 250, tels qu'un élément microcontrôleur, qui permettent d'activer et de désactiver le ou les circuits buck (ou boost) selon des règles prédéfinies qui gouvernent le fonctionnement des moyens d'activation. Les moyens d'activation 250 sont de préférence communs à tous les circuits buck 212, 222 du dispositif 200. Le dispositif 200 peut également comprendre un élément de stockage, par exemple une capacité de stockage 260, qui est branchée sur la sortie commune des circuits boost 210, 220.

Le dispositif comprend, pour chacune des branches boost-buck, des moyens de protection 214, 224. Les moyens 214 sont reliés à l'entrée du circuit boost 210, et empêchent l'activation du circuit buck 212 si la mesure de la tension d'entrée du circuit boost 210 est inférieure à une valeur seuil. De manière analogue, les moyens 224 sont reliés à l'entrée du circuit boost 220, et empêchent l'activation du circuit buck 222 si la mesure de la tension d'entrée du circuit boost 220 est inférieure à une valeur seuil.

La valeur seuil peut être fixée par l'homme du métier en dépendance de l'application visée par chaque branche du convertisseur 200. Le fonctionnement des moyens de protection 214, 224 est similaire au fonctionnement décrit pour les modes de réalisation illustrés par les Figures 1 et 2.

A l'aide de la description donnée, l'homme du métier saura modifier les circuits électroniques décrits et créer des circuits alternatifs implémentant des fonctions similaires sans pour autant sortir du cadre de la présente invention. Des caractéristiques décrites pour un mode de réalisation peuvent être combinées à celles d'autres modes de réalisation sauf indication explicite du contraire.

## Revendications

1. Dispositif (100, 200) de conversion de tension continue comprenant
au moins une branche de conversion, la branche comprenant un montage en série d'un circuit élévateur de tension (110), et d'un circuit abaisseur de tension (112), le circuit abaisseur étant apte à être activé ou désactivé par un signal d'activation ;
des moyens d'activation (150) du circuit abaisseur aptes à émettre un signal d'activation ;
**caractérisé en ce que** le dispositif comprend en outre des moyens de protection (114) reliés à l'entrée du circuit élévateur (110), qui empêchent l'activation du circuit abaisseur (112) si la mesure de la tension d'entrée du circuit élévateur est inférieure à une valeur seuil.

2. Dispositif selon la revendication 1, **caractérisé en ce que** les moyens de protection (114) comprennent
un élément comparateur, qui permet de comparer la mesure de la tension d'entrée du circuit élévateur (110) à une valeur seuil, et
un circuit « ET » logique ayant comme entrées la sortie du comparateur et le signal d'activation émis par les moyens d'activation (150), et dont le signal de sortie est relayé au circuit abaisseur (112), de façon à activer/désactiver celui-ci.

3. Dispositif selon une des revendications 1 ou 2, dans lequel la valeur seuil est inférieure à 6V, et préférentiellement égale à 5V.

4. Dispositif selon une des revendications 1 à 3, **caractérisé en ce que** les moyens de protection (114) permettent l'activation du circuit abaisseur (112) uniquement si la mesure de la tension d'entrée du circuit élévateur (110) est inférieure à une valeur seuil pendant une durée prédéterminée.

5. Dispositif selon la revendication 4, **caractérisé en ce que** les moyens de protection (114) comprennent un filtre électronique configuré pour filtrer la mesure de la tension d'entrée du circuit élévateur (110) avant de la comparer à ladite valeur seuil.

6. Dispositif selon une des revendications 1 à 5, **caractérisé en ce que** les moyens d'activation (150) et les moyens de protection (114) sont réalisés par un élément microcontrôleur unique.

7. Dispositif selon une des revendications 1 à 6, **caractérisé en ce que** le dispositif comprend un élément de stockage de charge électrique (160) agencé de façon à être chargé par le circuit élévateur (110) lorsque celui-ci est actif.

8. Dispositif (200) selon une des revendications 1 à 7, **caractérisé en ce que** le dispositif comprend au moins deux branches de conversion, chaque branche comprenant des moyens de protection (214, 224), et l'élément de stockage de charge électrique (260) étant agencé de façon à être chargé par le circuit élévateur (210, 220) de chaque branche lorsque celui-ci est actif.

9. Dispositif selon une des revendications 7 ou 8, **caractérisé en ce que** l'élément de stockage (160, 260) est une capacité électrique.

10. Dispositif selon une des revendications 1 à 9, dans lequel le ou les circuits élévateur de tension sont des circuits de type boost, et/ou dans lequel le ou les circuits abaisseur de tension sont des circuits de type buck.

11. Dispositif de pilotage de l'alimentation électrique d'au moins une source lumineuse, le dispositif comprenant un dispositif (100, 200) de conversion de tension continue, **caractérisé en ce que** le dispositif de conversion est conforme à une des revendications 1 à 10.

12. Dispositif selon la revendication 11, dans lequel l'au moins une source lumineuse est une diode électroluminescente, LED.

13. Dispositif lumineux d'un véhicule automobile, comprenant un dispositif de pilotage de l'alimentation électrique d'au moins une source lumineuse, **caractérisé en ce que** le dispositif de pilotage est conforme à une des revendications 11 ou 12.

14. Procédé de protection d'un convertisseur de tension continue comprenant les étapes suivantes :
- mise à disposition d'un convertisseur de tension continue (100, 200) comprenant au moins une branche de conversion, la branche comprenant un montage en série d'un circuit élévateur de tension (110), et d'un circuit abaisseur de tension (112), le circuit abaisseur étant apte à être activé ou désactivé par un signal d'activation ;
- mise à disposition de moyens d'activation (150) du circuit abaisseur aptes à émettre un signal d'activation ;
- protection du circuit abaisseur (112) en empêchant son activation par des moyens de protection (114) si la mesure de la tension d'entrée du circuit élévateur (110) est inférieure à une valeur seuil.

## Patentansprüche

1. Vorrichtung (100, 200) zur Gleichspannungsumwandlung, die enthält mindestens einen Umwandlungszweig, wobei der Zweig eine Reihenschaltung einer Spannungsaufwärtswandler-Schaltung (110) und einer Spannungsabwärtswandler-Schaltung (112) enthält, wobei die Abwärtswandler-Schaltung von einem Aktivierungssignal aktiviert oder deaktiviert werden kann;
Aktivierungseinrichtungen (150) der Abwärtswandler-Schaltung, die ein Aktivierungssignal senden können;
**dadurch gekennzeichnet, dass** die Vorrichtung außerdem mit dem Eingang der Aufwärtswandler-Schaltung (110) verbundene Schutzeinrichtungen (114) enthält, die die Aktivierung der Abwärtswandler-Schaltung (112) verhindern, wenn der Messwert der Eingangsspannung der Aufwärtswandler-Schaltung niedriger als ein Schwellwert ist.

2. Vorrichtung nach Anspruch 1, **dadurch gekennzeichnet, dass** die Schutzeinrichtungen (114) enthalten
ein Komparatorelement, das es ermöglicht, den Messwert der Eingangsspannung der Aufwärtswandler-Schaltung (110) mit einem Schwellwert zu vergleichen, und
eine logischen "UND"-Schaltung, die als Eingänge den Ausgang des Komparators und das von den Aktivierungseinrichtungen (150) gesendete Aktivierungssignal hat, und deren Ausgangssignal an die Abwärtswandler-Schaltung (112) weitergeleitet wird, um diese zu aktivieren/deaktivieren.

3. Vorrichtung nach einem der Ansprüche 1 oder 2, wobei der Schwellwert niedriger als 6V, und vorzugsweise gleich 5V ist.

4. Vorrichtung nach einem der Ansprüche 1 bis 3, **dadurch gekennzeichnet, dass** die Schutzeinrichtungen (114) die Aktivierung der Abwärtswandler-Schaltung (112) nur erlauben, wenn der Messwert der Eingangsspannung der Aufwärtswandler-Schaltung (110) während einer vorbestimmten Dauer niedriger als ein Schwellwert ist.

5. Vorrichtung nach Anspruch 4, **dadurch gekennzeichnet, dass** die Schutzeinrichtungen (114) ein elektronisches Filter enthalten, das konfiguriert ist, den Messwert der Eingangsspannung der Aufwärtswandler-Schaltung (110) vor seinem Vergleich mit dem Schwellwert zu filtern.

6. Vorrichtung nach einem der Ansprüche 1 bis 5, **dadurch gekennzeichnet, dass** die Aktivierungseinrichtungen (150) und die Schutzeinrichtungen (114) von einem einzigen Mikrokontrollerelement gebildet werden.

7. Vorrichtung nach einem der Ansprüche 1 bis 6, **dadurch gekennzeichnet, dass** die Vorrichtung ein Speicherelement einer elektrischen Ladung (160) enthält, das eingerichtet ist, von der Aufwärtswandler-Schaltung (110) geladen zu werden, wenn diese aktiv ist.

8. Vorrichtung (200) nach einem der Ansprüche 1 bis 7, **dadurch gekennzeichnet, dass** die Vorrichtung mindestens zwei Umwandlungszweige enthält, wobei jeder Zweig Schutzeinrichtungen (214, 224) enthält, und das Speicherelement einer elektrischen Ladung (260) so eingerichtet ist, dass es von der Aufwärtswandler-Schaltung (210, 220) jedes Zweigs geladen wird, wenn diese aktiv ist.

9. Vorrichtung nach einem der Ansprüche 7 oder 8, **dadurch gekennzeichnet, dass** das Speicherelement (160, 260) ein elektrischer Kondensator ist.

10. Vorrichtung nach einem der Ansprüche 1 bis 9, wobei die Spannungsaufwärtswandler-Schaltung(en) Schaltungen von der Art Boost ist(sind), und/oder wobei die Spannungsabwärtswandler-Schaltung(en) Schaltungen von der Art Buck ist(sind).

11. Vorrichtung zum Steuern der elektrischen Versorgung mindestens einer Lichtquelle, wobei die Vorrichtung eine Vorrichtung (100, 200) zur Gleichspannungsumwandlung enthält, **dadurch gekennzeichnet, dass** die Umwandlungsvorrichtung einem der Ansprüche 1 bis 10 entspricht.

12. Vorrichtung nach Anspruch 11, wobei die mindestens eine Lichtquelle eine Elektrolumineszenzdiode LED ist.

13. Leuchtvorrichtung eines Kraftfahrzeugs, die eine Vorrichtung zur Steuerung der elektrischen Versorgung mindestens einer Lichtquelle enthält, **dadurch gekennzeichnet, dass** die Steuervorrichtung einem der Ansprüche 11 oder 12 entspricht.

14. Verfahren zum Schutz eines Gleichspannungswandlers, das die folgenden Schritte enthält:
- Bereitstellung eines Gleichspannungswandlers (100, 200), der mindestens einen Umwandlungszweig enthält, wobei der Zweig eine Reihenschaltung einer Spannungsaufwärtswandler-Schaltung (110) und einer Spannungsabwärtswandler-Schaltung (112) enthält, wobei die Abwärtswandler-Schaltung von einem Aktivierungssignal aktiviert oder deaktiviert werden kann;
- Bereitstellung von Aktivierungseinrichtungen (150) der Abwärtswandler-Schaltung, die ein Aktivierungssignal senden können;
- Schutz der Abwärtswandler-Schaltung (112), indem ihre Aktivierung durch Schutzeinrichtungen (114) verhindert wird, wenn der Messwert der Eingangsspannung der Aufwärtswandler-Schaltung (110) niedriger als ein Schwellwert ist.

## Claims

1. DC voltage converter device (100, 200) including
at least one conversion branch including in series a voltage step-up circuit (110) and a voltage step-down circuit (112), the step-down circuit being adapted to be activated or deactivated by an activation signal, and
means (150) for activating the step-down circuit adapted to emit an activation signal,
**characterized in that** the device further includes protection means (114) connected to the input of the step-up circuit (110) that prevent the activation of the step-down circuit (112) if the measured input voltage of the step-up circuit is below a threshold value.

2. Device according to Claim 1, **characterized in that** the protection means (114) include
a comparator element that makes it possible to compare the measured input voltage of the step-up circuit (110) to a threshold value, and
a logic "AND" circuit having as inputs the output of the comparator and the activation signal emitted by the activation means (150) and the output signal of which is relayed to the step-down circuit (112) to activate/deactivate it.

3. Device according to either one of Claims 1 and 2, in which the threshold value is less than 6 V and preferably equal to 5 V.

4. Device according to any one of Claims 1 to 3, **characterized in that** the protection means (114) enable the activation of the step-down circuit (112) only if the measured input voltage of the step-up circuit (110) is below a threshold value for a predetermined time.

5. Device according to Claim 4, **characterized in that** the protection means (114) include an electronic filter configured to filter the measured input voltage of the step-up circuit (110) before comparing it to said threshold value.

6. Device according to any one of Claims 1 to 5, **characterized in that** the activation means (150) and the protection means (114) are provided by a single microcontroller.

7. Device according to any one of Claims 1 to 6, **characterized in that** the device includes an electric charge storage element (160) adapted to be charged by the step-up circuit (110) when the latter is active.

8. Device (200) according to any one of Claims 1 to 7, **characterized in that** the device includes at least two conversion branches, each branch including protection means (214, 224) and the electric charge storage element (260) being adapted to be charged by the step-up circuit (210, 220) of each branch when the latter is active.

9. Device according to either one of Claims 7 and 8, **characterized in that** the storage element (160, 260) is a capacitor.

10. Device according to any one of Claims 1 to 9, in which the voltage step-up circuit or circuits is or are boost circuits and/or in which the voltage step-down circuit or circuits is or are buck circuits.

11. Device for controlling the electrical power supply of at least one light source, the device including a DC voltage converter device (100, 200), **characterized in that** the converter device is a device according to any one of Claims 1 to 10.

12. Device according to Claim 11, in which the at least one light source is a light-emitting diode (LED).

13. Motor vehicle lighting device including a device for controlling the supply of electrical power to at least one light source, **characterized in that** the control device is a device according to either one of Claims 11 and 12.

14. Method of protecting a DC voltage converter including the following steps:
- providing a DC voltage converter (100, 200) including at least one conversion branch including in series a voltage step-up circuit (110) and a voltage step-down circuit (112), the step-down circuit being adapted to be activated or deactivated by an activation signal;
- providing means (150) for activation of the step-down circuit adapted to emit an activation signal;
- protecting the step-down circuit (112) by preventing its activation by protection means (114) if the measured input voltage of the step-up circuit (110) is below a threshold value.
